# FASCICULE DE BREVET EUROPEEN

(11) **EP 3 580 385 B1**
(45) Date de publication et mention de la délivrance du brevet: **07.12.2022**
(21) Numéro de dépôt: 18707081.8
(22) Date de dépôt: 02.02.2018
(51) Int. Cl.: D06F 75/10

(54) **FER A REPASSER COMPORTANT UN DISPOSITIF DE RÉTENTION DES PARTICULES DE TARTRE TRANSPORTÉES PAR LA VAPEUR**
BÜGELEISEN MIT EINER VORRICHTUNG ZUM RÜCKHALTEN VON DURCH DAMPF TRANSPORTIERTEN KALKPARTIKELN
IRON INCLUDING A DEVICE FOR RETAINING SCALE PARTICLES TRANSPORTED BY THE STEAM

(30) Priorité: 10.02.2017 FR 1751117
(43) Date de publication de la demande: 18.12.2019
(73) Titulaire: SEB S.A., 69130 Ecully (FR)
(72) Inventeur: GIOVALLE, Christian, 38440 Moidieu-Detourbe (FR); MAUDHUIT, Sylvain, 38270 Revel Tourdan (FR); BONIN, Jérôme, 38122 Monsteroux Milieu (FR)
(74) Mandataire: SEB Développement
(86) Numéro de dépôt international: PCT/FR2018/050270
(87) Numéro de publication internationale: WO 2018/146402

(56) Documents cités:
- EP-A1- 2 789 729
- FR-A1- 3 010 420
- FR-A1- 3 033 338
- US-A- 3 708 962
- US-A1- 2012 180 444

## Description

La présente invention concerne un fer à repasser comportant un corps chauffant comprenant une chambre de vaporisation pour la production d'un flux de vapeur et un circuit de distribution permettant d'acheminer le flux de vapeur vers au moins un trou de sortie de vapeur, et se rapporte plus particulièrement à un fer à repasser dans lequel le circuit de distribution de vapeur comprend une cavité dans laquelle est disposé un dispositif de rétention des particules de tartre transportées par le flux de vapeur, la cavité présentant une extrémité fermée par un bouchon amovible, accessible depuis l'extérieur de l'appareil, par laquelle le dispositif de rétention peut être extrait de l'appareil pour son nettoyage.

Il est connu de la demande de brevet FR3010420 déposée par la demanderesse, un fer à repasser comprenant un circuit de distribution de vapeur reliant une chambre de vaporisation instantanée à des trous de sortie de vapeur ménagés dans la plaque de repassage du fer à repasser. Dans ce document, le circuit de distribution de vapeur comporte une cavité comprenant une grille de filtration destinée à retenir les particules de tartre transportées par le flux de vapeur, la grille de filtration étant portée par un récipient récupérateur de tartre qui est amovible par un orifice ménagé sur le talon du fer à repasser.

Un tel fer à repasser présente l'avantage de retenir, en amont de la grille de filtration, les plus grosses particules de tartre évitant que ces dernières ne soient émises par les trous de sortie de vapeur de la plaque de repassage et ne viennent tacher le linge. Il présente également l'avantage de permettre l'extraction de la grille de filtration pour son nettoyage et l'évacuation des particules de tartre qui ont été retenues en amont de la grille de filtration.

Cependant, dans ce fer à repasser, le circuit de distribution de vapeur associé au dispositif de rétention présente l'inconvénient d'être relativement complexe à réaliser. De plus, le fer à repasser ainsi réalisé présente l'inconvénient de posséder un corps chauffant relativement encombrant, notamment en hauteur, de sorte qu'il occupe une partie du volume habituellement destiné au réservoir intégré dans le boîtier qui surmonte le corps chauffant. Il s'ensuit une obligation de réduire le volume du réservoir si l'on souhaite conserver un fer à repasser avec un encombrement réduit, ou d'augmenter les dimensions du boîtier qui surmonte le corps chauffant si l'on souhaite conserver un volume de réservoir important.

Aussi, un but de la présente invention est de proposer un fer à repasser remédiant à ces inconvénients. En particulier, un but de la présente invention est de proposer un fer à repasser simple et économique à réaliser. Un autre but de la présente invention est de proposer un fer à repasser présentant un circuit de distribution de vapeur, associé à un dispositif de rétention des particules de tartre, présentant une construction plus compacte, notamment dans le sens de la hauteur par rapport à la plaque de repassage.

A cet effet, l'invention se rapporte à un fer à repasser comportant un corps chauffant comprenant une chambre de vaporisation pour la production d'un flux de vapeur et un circuit de distribution de vapeur permettant d'acheminer le flux de vapeur vers au moins un trou de sortie de vapeur, le circuit comprenant une cavité dans laquelle est disposé un dispositif de rétention comprenant une grille de filtration destinée à retenir des particules de tartre transportées par le flux de vapeur, la cavité présentant une extrémité ouverte par laquelle le flux de vapeur pénètre dans la cavité, caractérisé en ce que la cavité forme une impasse d'où le flux de vapeur s'échappe en direction du trou de sortie de vapeur en passant de nouveau par l'extrémité ouverte.

Une telle construction permet d'avoir une cavité dans laquelle le flux de vapeur entre et s'échappe par une même extrémité longitudinale de la cavité permettant de réduire l'encombrement en hauteur de la cavité. De cette manière, le flux de vapeur pénétrant dans la cavité et le flux de vapeur sortant de la cavité peuvent être disposés côte à côte dans une même épaisseur du corps chauffant.

Le fer à repasser ainsi réalisé a l'avantage de présenter une plus grande simplicité de construction et une bonne compacité, notamment dans le sens de la hauteur. En particulier, dans cette construction, la cavité ne comporte pas de sortie du flux de vapeur transversale à la direction longitudinale de la cavité de sorte que l'encombrement du circuit de distribution de vapeur est réduit, le flux de vapeur entrant et sortant de la cavité en passant uniquement par l'extrémité longitudinale ouverte de la cavité.

Selon une autre caractéristique de l'invention, l'extrémité ouverte de la cavité est disposée d'un côté de la cavité et la cavité présente, de l'autre côté de la cavité, une extrémité munie d'un orifice par lequel le dispositif de rétention peut être extrait du fer à repasser pour son nettoyage, l'orifice étant fermé par un bouchon amovible accessible depuis l'extérieur de l'appareil.

Selon une autre caractéristique de l'invention, le dispositif de rétention occupe toute la hauteur de la cavité lorsqu'il est engagé dans la cavité.

Selon une autre caractéristique de l'invention, le circuit de distribution comporte un conduit d'amenée de vapeur qui communique d'une part avec la chambre de vaporisation et qui débouche d'autre part dans l'extrémité ouverte de la cavité.

Une telle construction présente l'avantage d'être simple et économique à réaliser. En particulier, un tel conduit présente l'avantage de réaliser, au moyen d'une seule pièce, la séparation entre le flux de vapeur entrant dans la cavité, qui circule à l'intérieur du conduit, et le flux de vapeur sortant de la cavité, qui circule à l'extérieur du conduit.

Selon une autre caractéristique de l'invention, le corps chauffant comprend une paroi périphérique qui délimite latéralement l'extrémité ouverte de la cavité, le conduit s'insérant dans l'extrémité ouverte en laissant au moins un espace entre le conduit et la paroi périphérique qui forme un canal de sortie par lequel le flux de vapeur s'échappe de la cavité après être passé au travers de la grille de filtration.

Selon une autre caractéristique de l'invention, le corps chauffant comporte deux canaux de sortie disposés latéralement de chaque côté du conduit.

Une telle caractéristique permet une répartition homogène du flux de vapeur sortant de la cavité sur les deux côtés du corps chauffant.

Selon une autre caractéristique de l'invention, la chambre de vaporisation est fermée dans sa partie supérieure par une plaque de fermeture qui vient reposer sur la paroi périphérique.

Une telle caractéristique permet d'optimiser la facilité de construction et la compacité du corps chauffant.

Selon une autre caractéristique de l'invention, le conduit d'amenée de vapeur est réalisé dans une pièce qui est rapportée dans le corps chauffant et qui est connectée de manière étanche à une ouverture ménagée dans une cloison qui délimite latéralement la chambre de vaporisation.

Une telle caractéristique permet de simplifier la fabrication du conduit d'amenée de vapeur et du corps chauffant.

Selon une autre caractéristique de l'invention, le conduit d'amenée de vapeur s'étend longitudinalement au fer à repasser, l'ouverture étant ménagée à une extrémité arrière de la chambre de vaporisation.

Une telle caractéristique permet de recueillir, par gravité, les particules de tartre dans le dispositif de rétention lorsque le fer à repasser est placé verticalement sur son talon.

Selon une autre caractéristique de l'invention, le dispositif de rétention comporte un embout venant se connecter de manière étanche et amovible au conduit d'amenée de vapeur, l'embout comprenant une ouverture axiale par laquelle le flux de vapeur est admis dans le dispositif de rétention.

Une telle caractéristique permet d'offrir une connexion simple et fiable du dispositif de rétention sur le conduit d'amenée de vapeur.

Selon encore une autre caractéristique de l'invention, le dispositif de rétention comporte un récipient récupérateur de tartre s'introduisant dans la cavité par l'orifice d'évacuation du tartre, le récipient étant disposé en amont de la grille de filtration par rapport au sens d'écoulement du flux de vapeur.

Une telle caractéristique présente l'avantage de permettre l'évacuation du tartre du fer à repasser en retirant simplement le récipient récupérateur de tartre par l'orifice.

Selon une autre caractéristique de l'invention, le récipient récupérateur de tartre présente un volume de stockage supérieur à 4 cm^{3.}

Une telle caractéristique permet de recueillir les particules de tartre accumulées entre deux entretiens, ainsi que l'eau non vaporisée dans la chambre de vaporisation, sans venir souiller la grille de filtration.

Selon encore une autre caractéristique de l'invention, le dispositif de rétention présente une extrémité avant ouverte et une extrémité postérieure fermée, le dispositif de rétention comportant une fenêtre latérale, recevant la grille de filtration, par laquelle le flux de vapeur s'échappe du dispositif de rétention.

Selon une autre caractéristique de l'invention, le dispositif de rétention comporte un joint d'étanchéité de part et d'autre de la fenêtre.

Selon encore une autre caractéristique de l'invention, le dispositif de rétention est solidaire du bouchon.

Une telle caractéristique permet d'avoir un dispositif de rétention qui est extrait automatiquement de l'appareil lors du retrait du bouchon, permettant une inspection systématique de l'état de la grille de filtration par l'utilisateur lorsqu'une opération de nettoyage est effectuée.

Une telle caractéristique permet également de réduire le nombre de manipulations que doit effectuer l'utilisateur pour accéder à la grille de filtration et d'éviter ainsi que l'utilisateur oublie de remettre la grille de filtration après son nettoyage.

Selon encore une autre caractéristique de l'invention, le fer à repasser comporte un boîtier qui surmonte le corps chauffant, le boîtier intégrant un réservoir qui alimente en liquide la chambre de vaporisation.

Selon une autre caractéristique de l'invention, la grille de filtration présente une surface ondulée.

Une telle caractéristique permet d'augmenter la surface utile de la grille de filtration pour un encombrement donné. Elle permet donc d'augmenter le débit de vapeur pouvant être traversé par la grille de filtration ainsi que le temps s'écoulant avant qu'elle soit totalement colmatée par le tartre.

Selon une autre caractéristique de l'invention, les ouvertures de la grille de filtration présentent au maximum une taille de 0,4 mm de côté.

Une telle caractéristique permet de ne laisser passer que des particules de tartre sensiblement invisibles vers les trous de sortie de vapeur.

Selon une autre caractéristique de l'invention, la chambre de vaporisation est une chambre de vaporisation instantanée.

Selon encore une autre caractéristique de l'invention, les trous de sortie de vapeur sont ménagés dans une plaque de repassage, le boîtier du fer à repasser comportant un talon sur lequel il peut reposer lors des phases inactives de repassage.

Selon une autre caractéristique de l'invention, le boitier comporte une partie une en porte-à-faux qui s'étend derrière la plaque de repassage et qui supporte le talon, la cavité étant disposée au moins partiellement dans la partie en porte-à-faux.

Selon une autre caractéristique de l'invention, l'orifice d'évacuation du tartre débouche au niveau du talon du fer à repasser.

Une telle caractéristique présente l'avantage d'offrir un excellent accès à l'orifice d'évacuation du tartre lorsque le fer à repasser repose sur sa plaque de repassage.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un fer à repasser selon un mode particulier de réalisation de l'invention ;
- la figure 2 est une vue en coupe longitudinal du corps chauffant et de la plaque de repassage équipant le fer à repasser de la figure 1 ;
- la figure 3 est une vue en perspective du corps chauffant de la figure 2 ;
- la figure 4 est une vue de dessus du corps chauffant de la figure 3 démuni de son couvercle de fermeture ;
- les figures 5 et 6 sont respectivement des vues en perspective et de côté du corps chauffant de la figure 4 ;
- les figures 7 et 8 sont respectivement des vues en coupe selon la ligne VII-VII et la ligne VIII-VIII de la figure 6 ;
- la figure 9 est une vue en perspective du corps chauffant de la figure 4 sans le bouchon, ni le récipient récupérateur de tartre ;
- la figure 10 est une vue en perspective du récipient récupérateur de tartre fixé sur le bouchon équipant le fer à repasser de la figure 1 ;
- Les figures 11A et 11B illustrent deux exemples de réalisation de la grille de filtration pouvant équiper le récipient récupérateur de tartre.

Seuls les éléments nécessaires à la compréhension de l'invention ont été représentés. Pour faciliter la lecture des dessins les mêmes éléments portent les mêmes références d'une figure à l'autre.

On notera que dans ce document, les termes "horizontal", "vertical", "inférieur", "supérieur", "avant", "arrière" employés pour décrire le fer à repasser font référence à cet appareil lorsqu'il repose à plat sur sa plaque de repassage.

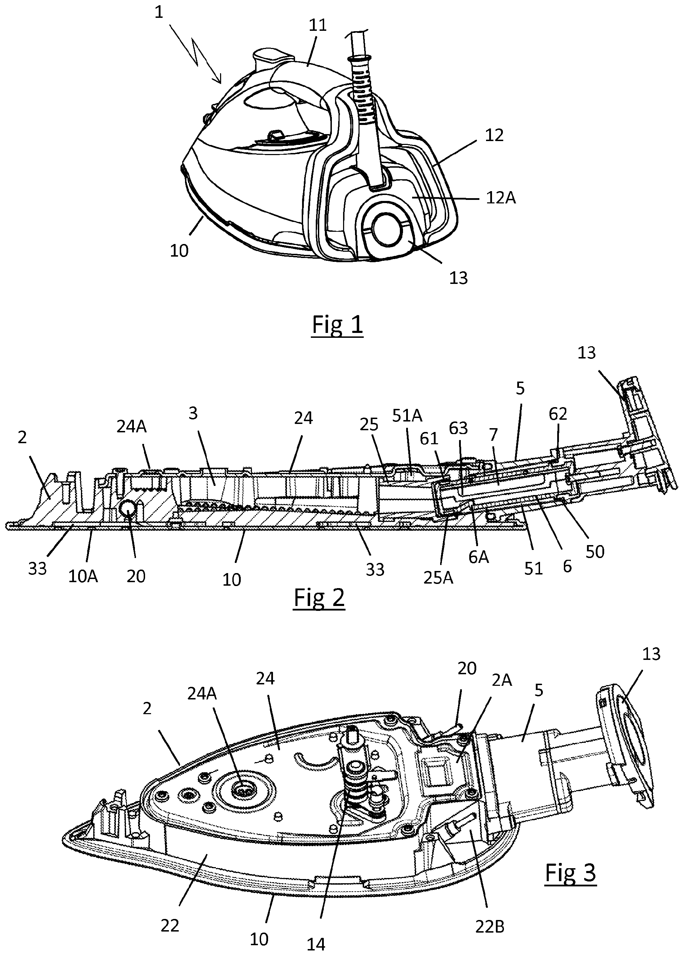

La figure 1 illustre un fer à repasser 1 à vapeur comportant une plaque de repassage 10 munie d'un ensemble de trous de sortie de vapeur 10A, visibles seulement sur la figure 2, la plaque de repassage 10 étant surmontée d'un boîtier en matière plastique comprenant une poignée 11 de préhension s'étendant longitudinalement au fer à repasser.

La poignée 11 présente une extrémité arrière se prolongeant par un talon 12 sur lequel le fer à repasser peut reposer sensiblement verticalement lors des phases inactives de repassage, le talon 12 comportant deux bras délimitant entre eux un espace recevant un bouchon 13 amovible donnant accès à un orifice 50 d'évacuation du tartre, visible sur la figure 2.

Le bouchon 13 est fixé sur une surface postérieure 12A du boîtier, inscrite à l'intérieur du talon 12, par une fixation de type baïonnette semblable à celle décrite plus en détails dans la demande de brevet FR2981371 déposée par la demanderesse, la surface postérieure du boîtier étant légèrement inclinée vers l'avant pour offrir un accès plus aisé lorsque le fer à repasser repose horizontalement sur sa plaque de repassage 10.

Conformément aux figures 2 à 4, la plaque de repassage 10 du fer à repasser est liée thermiquement et mécaniquement à un corps chauffant 2 intégré dans la partie basse du boîtier, le corps chauffant 2 comportant une fonderie en aluminium comprenant classiquement un élément résistif 20 cintré en fer à cheval et un bossage 21 prévu pour recevoir un thermostat 14 de régulation de la température de la plaque de repassage 10.

La plaque de repassage 10 comporte, de manière connue en soi, une extrémité avant pointue et présente une largeur augmentant progressivement depuis l'extrémité avant pointue jusqu'à une extrémité arrière arrondie.

Le corps chauffant 2 comporte une paroi périphérique 22 qui délimite latéralement un espace comprenant une chambre de vaporisation 3 principale et une chambre de survapeur 4, toutes les deux de type à vaporisation instantanée, comportant un fond présentant avantageusement une multitude de plots pyramidaux permettant d'augmenter la surface d'échange thermique.

La chambre de vaporisation 3 est disposée au centre du corps chauffant 2 et est reliée aux trous de sortie de vapeur 10A de la plaque de repassage 10 par un circuit de distribution de vapeur comprenant deux canaux de diffusion latéraux 30 s'étendant de part et d'autre de la chambre de vaporisation 3 et se rejoignant, à l'extrémité avant du corps chauffant 2, au niveau d'une zone de jonction avant 30A et à l'extrémité arrière du corps chauffant 2, au niveau d'une zone de jonction arrière 30B. Les canaux latéraux 30 comportent classiquement des orifices 31 traversant le corps chauffant 2 pour déboucher sur la face inférieure du corps chauffant, au niveau de cavités de distribution de vapeur 33, visibles sur la figure 2, disposées en regard des trous de sortie de vapeur 10A de la plaque de repassage.

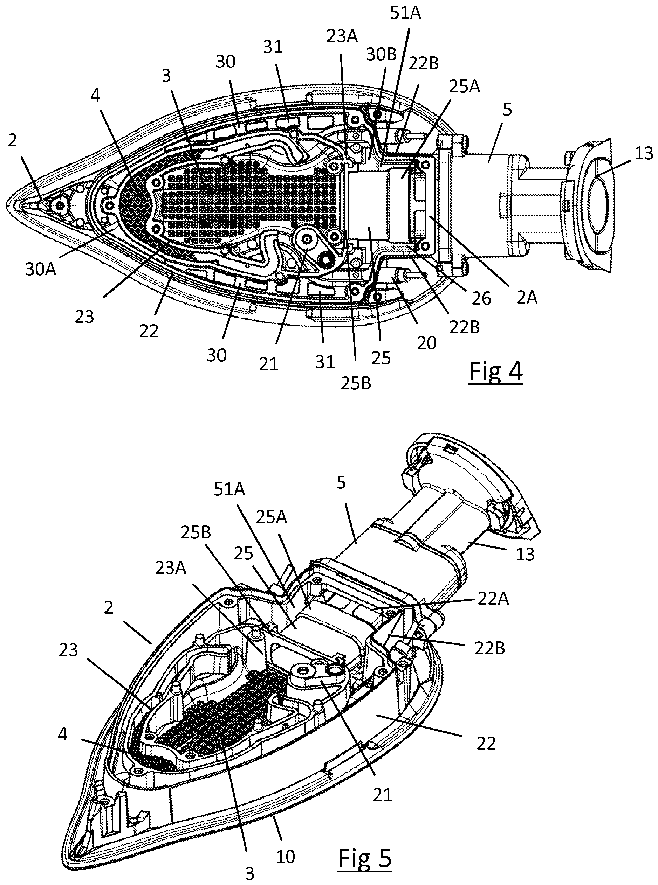

Conformément aux figures 2 et 5, le corps chauffant 2 comporte également une plaque de fermeture 24 qui vient reposer sur le bord supérieur de la paroi périphérique 22, cette plaque de fermeture 24 étant surmontée d'un réservoir d'eau, non représenté sur les figures, intégré dans le boîtier du fer à repasser. Le réservoir alimente en eau la chambre de vaporisation 3 par un orifice 24A ménagé dans la plaque de fermeture 24, cet orifice 24A recevant, de manière connue en soi, un boisseau goutte-à-goutte, non représenté sur les figures, permettant la production d'un débit de vapeur en continu de l'ordre de 40 à 70 gr/min.

La chambre de vaporisation 3 principale est délimitée latéralement par une cloison 23 remontant jusqu'à la plaque de fermeture 24, en étant liée de manière étanche avec cette dernière, de sorte que la vapeur produite dans la chambre de vaporisation 3 ne peut s'échapper que par une ouverture 23A ménagée dans la cloison 23 au niveau de l'extrémité arrière de la chambre de vaporisation 3.

Comme on peut le voir sur les figures 4 et 5, le corps chauffant 2 renferme un conduit 25 d'amenée de vapeur comprenant une extrémité avant qui est raccordée à l'ouverture 23A, le conduit 25 s'étendant sensiblement parallèlement au plan de la plaque de repassage 10 et comprenant une extrémité arrière munie d'un manchon de raccordement 25A.

De manière préférentielle, le conduit 25 est réalisé par moulage en matière plastique, par exemple en matériau de type PPS (Polysulfure de phénylène), et est rapporté dans le corps chauffant 2 en aluminium en étant raccordé de manière étanche au niveau de l'ouverture 23A. A cet effet, l'ouverture 23A présente avantageusement une forme rectangulaire et est délimitée latéralement par deux bordures verticales sur lesquelles viennent s'engager des rainures portées par une paroi de raccordement 25B solidaire de l'extrémité avant du conduit 25 d'amenée de vapeur.

Conformément à la figure 3, le corps chauffant 2 comporte une zone arrière 2A de largeur réduite où la paroi périphérique 22 présente deux portions 22B qui s'étendent parallèlement à la direction longitudinale du fer à repasser 1, en direction de l'arrière du fer à repasser 1, et délimitent entre elles un volume dans lequel vient s'engager l'extrémité arrière du conduit 25.

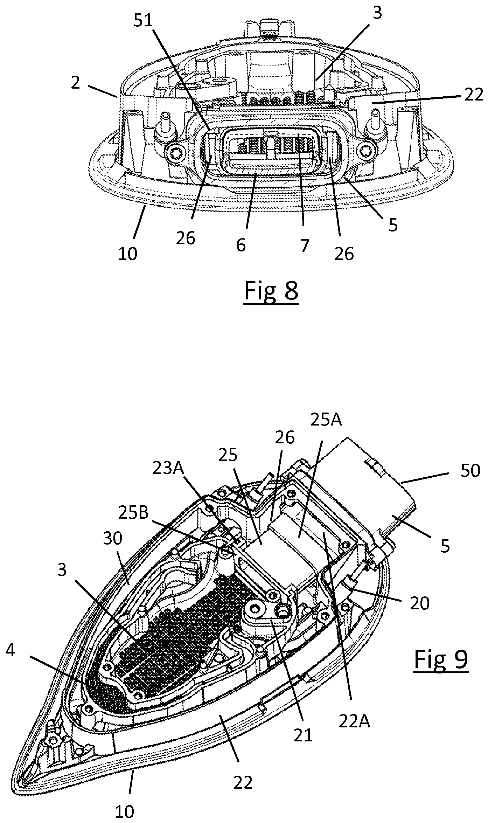

Comme on peut le voir sur les figures 5 et 9, le fer à repasser 1 comporte un collecteur 5 qui vient se fixer par deux vis dans le prolongement de la zone arrière 2A du corps chauffant 2, au niveau de la paroi périphérique 22. Le collecteur 5 présente avantageusement la forme d'un conduit de section de passage oblongue comprenant une extrémité avant ouverte venant en regard d'une ouverture 22A ménagée dans la paroi périphérique 22 et une extrémité arrière comprenant l'orifice 50 recevant le bouchon 13 amovible.

De manière préférentielle, le collecteur 5 s'étend obliquement par rapport au plan de la plaque de repassage 10, en faisant un angle de l'ordre de 10°, et il se trouve en porte à faux derrière la plaque de repassage 10 lorsque le fer à repasser repose à plat sur sa plaque de repassage 10. Le collecteur 5 est avantageusement réalisé par moulage en matière plastique, par exemple en matériau de type PPS (Polysulfure de phénylène).

L'ouverture 22A met en communication le volume ménagé dans la zone arrière 2A du corps chauffant 2 avec un volume ménagé à l'intérieur du collecteur 5 pour former une cavité 51 de réception d'un dispositif 8 de rétention des particules de tartre, représenté isolément sur la figure 9, la cavité 51 comprenant une extrémité ouverte 51A débouchant dans la zone de jonction arrière 30B des canaux latéraux 30 et une extrémité arrière fermée par le bouchon 13.

Comme on peut le voir sur les figures 4, 7 et 8, le conduit 25 présente une largeur plus faible que la largeur de la cavité 51 de sorte qu'il résulte, de chaque côté du conduit 25 et du manchon de raccordement 25A, un espace, présentant avantageusement une largeur supérieure à 3 mm, qui forme un canal de sortie 26 par lequel le flux de vapeur envoyé dans la cavité 51 par le conduit 25 peut s'échapper en direction de la zone de jonction arrière 30B puis au travers des canaux latéraux 30.

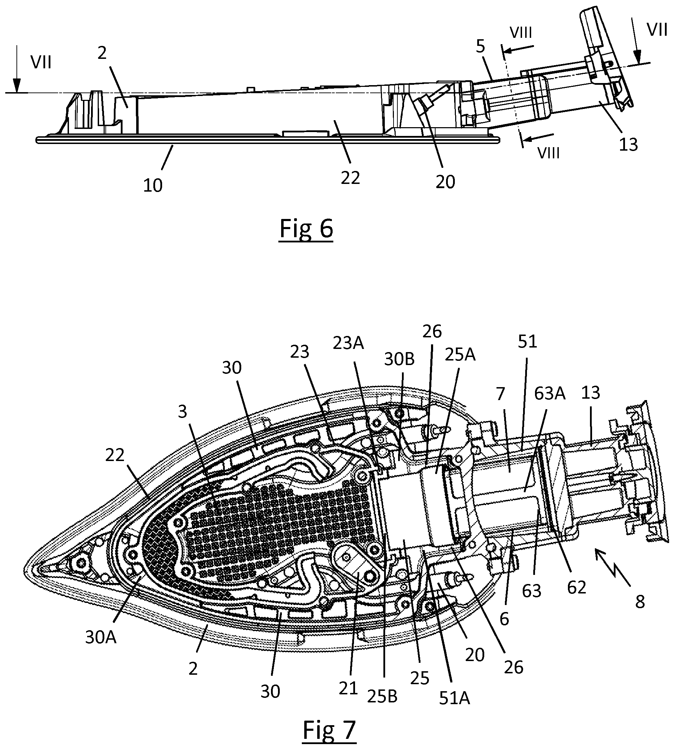

Conformément aux figures 7, 8 et 10, le dispositif 8 de rétention des particules de tartre comprend un récipient 6 récupérateur de tartre avantageusement réalisé en matériau plastique, du type polyamide PA 6-6 renforcé de fibre de verre à 30%. Le récipient 6 comporte un embout 60 qui vient s'emboiter dans le manchon de raccordement 25A et qui comprend une ouverture axiale par laquelle le flux de vapeur émis par la chambre de vaporisation 3 est admis dans le récipient 6 et une extrémité arrière fermée fixée au bouchon 13.

De manière préférentielle, le manchon de raccordement 25A s'étend sensiblement sur toute la hauteur de la cavité 51 de manière à ce que la cavité 51 assure un pré-guidage vertical de l'embout 60 en direction du manchon de raccordement 25A lorsque le récipient 6 est introduit dans la cavité 51 par l'orifice 50.

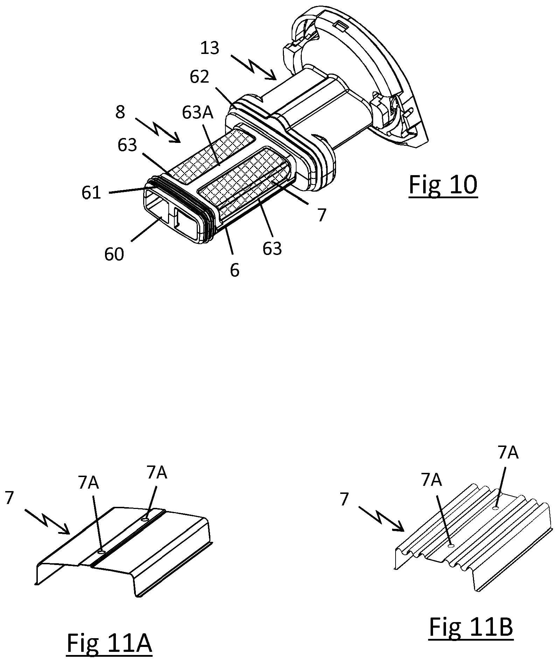

Comme on peut le voir sur la figure 10, le récipient 6 supporte un premier joint d'étanchéité 61 en silicone porté par l'embout 60 qui vient s'engager dans le manchon de raccordement 25A pour établir une liaison sensiblement étanche avec ce dernier lorsque le bouchon 13 occupe une position fermée, illustrée sur les figures 1 à 7, dans laquelle il est verrouillé sur la surface postérieure 12A du fer à repasser 1.

Le récipient 6 comporte également un second joint d'étanchéité 62 en silicone qui vient au contact de la paroi intérieure de la cavité 51, en bordure de l'orifice 50, pour éviter l'émission de vapeur au travers de l'orifice 50 lorsque le bouchon 13 occupe la position fermée.

Le récipient 6 comporte, entre les deux joints d'étanchéité 61, 62, deux fenêtres 63 ouvertes à la fois sur la face latérale et la face supérieure du récipient 6, les deux fenêtres 63 étant disposées de part et d'autre d'un barreau 63A longitudinal disposé au sommet du récipient 6.

Le récipient 6 comprend une grille 7 de filtration, illustrée isolément sur la figure 11A, qui s'étend au travers des fenêtres 63 et sur toute leur surface, la grille 7 de filtration étant avantageusement fixée au barreau 63A par deux points de fixation 7A.

Dans l'exemple de réalisation illustré sur la figure 11A, la grille 7 présente en regard de chaque fenêtre 63, une première surface plane qui s'étend sensiblement horizontalement et une deuxième surface qui s'étend sensiblement verticalement lorsque le dispositif 8 est engagé dans la cavité 51 et que le fer à repasser 1 repose à plat sur la plaque de repassage 10.

La grille 7 présente des ouvertures calibrées pour retenir les particules de tartre les plus grosses tout en offrant une section de passage suffisante pour le débit de vapeur requis. A titre d'exemple, la grille 7 de filtration est réalisée en fil d'inox de 0,1 mm de diamètre, ou en tissu de verre réalisé à partir d'un fil tressé de 1 mm de diamètre, et comporte des ouvertures carrées de moins de 0.4 mm de côté, et préférentiellement comprises entre 0.1 mm et 0.4 mm, la surface de la grille étant au minimum de 8 cm² pour des ouvertures carrées de 0.2 mm et un débit de vapeur prévu de l'ordre de 40 à 50 gr/min.

La figure 11B illustre une variante de réalisation de la grille 7 de filtration pouvant équiper le récipient 6 dans laquelle la surface de la grille 7 de filtration venant en regard des fenêtres 63 est ondulée. Une telle ondulation permet d'augmenter la surface de la grille 7 de filtration tout en conservant un encombrement réduit.

Conformément à la figure 2, le récipient 6 comporte une partie inférieure creuse, présentant préférentiellement un volume de l'ordre de 4 à 5 cm³, dans laquelle les particules de tartre peuvent être stockées, l'extrémité avant de la partie creuse présentant une marche 6A permettant d'éviter que le tartre récupéré dans le récipient 6 ne retourne par gravité dans la chambre de vaporisation 3 lorsque le fer à repasser 1 est disposé sur sa plaque de repassage 10.

L'écoulement du flux de vapeur dans le fer à repasser 1 ainsi réalisé va maintenant être décrit.

Lorsque l'eau issue du boisseau goutte à goutte parvient au contact du fond de la chambre de vaporisation 3, elle se vaporise instantanément, ce qui provoque le dégagement d'un flux de vapeur qui s'échappe successivement au travers du conduit 25, du récipient 6, de la grille 7 de filtration, des canaux de sortie 26 et des canaux latéraux 30, le flux de vapeur traversant ensuite les orifices 31 pour déboucher sur la face inférieure de la plaque de repassage 10 et s'échapper par les trous de sortie 10A de la plaque de repassage.

L'évaporation de l'eau crée la formation d'une couche de carbonate de calcium dans le fond de la chambre de vaporisation 3 qui se désagrège progressivement en petites particules de tartre sous l'effet notamment de la dilatation du corps chauffant 2 lors des phases de refroidissement entre deux séances de repassage.

Les particules de tartre présentes dans la chambre de vaporisation 3 se trouvent emmenées progressivement par le flux de vapeur dans le conduit 25 et se trouvent pour partie envoyées, par leur inertie, dans le fond du récipient 6 récupérateur de tartre, où elles se trouvent piégées, et pour partie envoyées vers la grille de filtration 7. Cette séparation inertielle des particules de tartre s'effectue notamment grâce au virage de l'ordre de 90° qu'effectue le flux de vapeur à l'entrée de la grille 7.

Le déplacement des particules de tartre vers le récipient 6 s'effectue également par gravité à chaque fois que le fer à repasser 1 est placé sur son talon 12, le volume de stockage ménagé dans la partie creuse du récipient 6 étant adapté pour recevoir les particules de tartre, accompagnées d'éventuelles gouttes d'eau, sans que ces dernières ne viennent au contact de la grille 7, évitant ainsi son souillage.

Lors de l'arrêt de la vapeur, la plupart des particules piégées par la grille 7 retombent par gravité dans la partie creuse du récipient 6, quelques particules pouvant toutefois rester collées sur la grille 7 et contribuer au colmatage progressif cette dernière, la grille 7 s'entartrant également du fait de l'évaporation des éventuelles gouttelettes d'eau parvenant au contact de la grille 7.

Lorsqu'un nettoyage du fer à repasser 1 est nécessaire, c'est-à-dire après plusieurs séances de repassage à la vapeur, ou lorsqu'un témoin d'alerte est activé sur le fer à repasser, l'utilisateur peut aisément extraire le récipient 6 récupérateur de la cavité 51 en déverrouillant le bouchon 13 et en le déplaçant vers l'arrière de manière à faire coulisser axialement le récipient 6 au travers de l'orifice 50 d'évacuation du tartre.

Le contenu du récipient 6 peut alors être vidé et le récipient 6 peut être passé sous l'eau du robinet pour son nettoyage. Si l'utilisateur le juge nécessaire, il peut également effectuer un nettoyage de la grille 7 en la frottant sous l'eau avec une brosse ou en la plongeant dans un liquide détartrant.

Le fer à repasser ainsi réalisé présente l'avantage de comporter un circuit de distribution de la vapeur associé à un dispositif de rétention des particules qui présentent l'avantage d'être simples à réaliser, l'extrémité avant ouverte de la cavité présentant l'avantage de servir à la fois à amener la vapeur dans la cavité grâce au conduit d'amener de vapeur, et à évacuer la vapeur de la cavité grâce aux conduits de sortie de vapeur ménagés de part et d'autre du conduit d'amenée de vapeur.

De plus, une telle construction a l'avantage de présenter un très faible encombrement, notamment dans le sens de la hauteur, ce qui permet, pour une même taille de fer à repasser, d'avoir une capacité de réservoir accrue et donc une plus grande autonomie pour la production de vapeur.

Bien entendu, l'invention n'est nullement limitée au mode de réalisation précédemment décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation de l'invention non représentée, le récipient récupérateur de tartre pourra ne pas être fixé sur le bouchon mais comporter à son extrémité postérieure une poignée lui permettant d'être saisi manuellement par l'utilisateur après le retrait du bouchon.

Ainsi, dans une autre variante de réalisation non représentée, la grille de filtration pourra être montée de manière amovible sur le récipient récupérateur de tartre de sorte que la grille de filtration puisse être changée en cas de besoin.

Ainsi dans une autre variante de réalisation non représentée, le bouchon pourra être disposée sur une face inférieure de la partie du talon s'étendant en porte à faux derrière la plaque de repassage.

## Revendications

1. Fer à repasser (1) comportant un corps chauffant (2) comprenant une chambre de vaporisation (3) pour la production d'un flux de vapeur et un circuit de distribution de vapeur permettant d'acheminer le flux de vapeur vers au moins un trou (10A) de sortie de vapeur, ledit circuit comprenant une cavité (51) dans laquelle est disposé un dispositif (8) de rétention comprenant une grille (7) de filtration destinée à retenir des particules de tartre transportées par le flux de vapeur, ladite cavité (51) présentant une extrémité ouverte (51A) par laquelle le flux de vapeur pénètre dans la cavité (51), **caractérisé en ce que** la cavité (51) forme une impasse d'où le flux de vapeur s'échappe en direction du trou (10A) de sortie de vapeur en passant de nouveau par ladite extrémité ouverte (51A) , le flux de vapeur pénétrant dans la cavité et le flux de vapeur sortant de la cavité étant disposés côte à côte dans une même épaisseur du corps chauffant (2).

2. Fer à repasser selon la revendication 1, **caractérisé en ce que** l'extrémité ouverte (51A) de la cavité (51A) est disposée d'un côté de la cavité (51) et **en ce que** la cavité présente de l'autre côté, une extrémité munie d'un orifice (50) par lequel le dispositif (8) de rétention peut être extrait du fer à repasser (1) pour son nettoyage, ledit orifice (50) étant fermé par un bouchon (13) amovible accessible depuis l'extérieur de l'appareil.

3. Fer à repasser selon l'une quelconque des revendications 1 à 2, **caractérisé en ce que** le circuit de distribution comporte un conduit (25) d'amenée de vapeur qui communique d'une part avec la chambre de vaporisation (3) et qui débouche d'autre part dans l'extrémité ouverte (51A) de la cavité (51).

4. Fer à repasser selon la revendication 3, **caractérisé en ce que** le corps chauffant (2) comprend une paroi périphérique (22) qui délimite latéralement l'extrémité ouverte (51A) de la cavité (51), le conduit (25) s'insérant dans l'extrémité ouverte (51A) en laissant au moins un espace entre le conduit (25) et la paroi périphérique (22) qui forme un canal de sortie (26) par lequel le flux de vapeur s'échappe de la cavité (51) après être passé au travers de la grille (7) de filtration.

5. Fer à repasser selon la revendication 4, **caractérisé en ce que** le corps chauffant (2) comporte deux canaux de sortie (26) disposés latéralement de chaque côté du conduit (25).

6. Fer à repasser selon l'une quelconque des revendications 4 à 5, **caractérisé en ce que** la chambre de vaporisation (3) est fermée dans sa partie supérieure par une plaque de fermeture (24) qui vient reposer sur la paroi périphérique (22)

7. Fer à repasser selon l'une quelconque des revendications 3 à 6, **caractérisé en ce que** le conduit (25) d'amenée de vapeur est réalisé dans une pièce qui est rapportée dans le corps chauffant (2) et qui est connectée de manière étanche à une ouverture (23A) ménagée dans une cloison (3) qui délimite latéralement la chambre de vaporisation (3).

8. Fer à repasser selon la revendication 7, **caractérisé en ce que** le conduit (25) d'amenée de vapeur s'étend longitudinalement au fer à repasser (1), ladite ouverture (23A) étant ménagée à une extrémité arrière de la chambre de vaporisation (3).

9. Fer à repasser selon l'une quelconque des revendications 3 à 8, **caractérisé en ce que** le dispositif (8) de rétention comporte un embout (60) venant se connecter de manière étanche et amovible au conduit (25) d'amenée de vapeur, l'embout (60) comprenant une ouverture axiale par laquelle le flux de vapeur est admis dans le dispositif (8) de rétention.

10. Fer à repasser (1) selon l'une quelconque des revendications 2 à 9, **caractérisé en ce que** le dispositif de rétention (8) comporte un récipient (6) récupérateur de tartre s'introduisant dans la cavité (51) par l'orifice d'évacuation du tartre (50), le récipient (6) étant disposé en amont de la grille (7) de filtration par rapport au sens d'écoulement du flux de vapeur.

11. Fer à repasser (1) selon l'une quelconque des revendications 1 à 10, **caractérisé en ce que** le dispositif (8) présente une extrémité avant ouverte et une extrémité postérieure fermée, le dispositif (8) comportant une fenêtre (63) latérale recevant la grille de filtration (7) et par laquelle le flux de vapeur s'échappe du dispositif (8) de rétention.

12. Fer à repasser (1) selon la revendication 11, **caractérisé en ce que** le dispositif (8) de rétention comporte un joint d'étanchéité (61, 62) de part et d'autre de la fenêtre (63).

13. Fer à repasser selon l'une quelconque des revendications 2 à 12, **caractérisé en ce que** le dispositif (8) de rétention est solidaire du bouchon (13).

14. Fer à repasser (1) selon l'une quelconque des revendications 1 à 13, **caractérisé en ce qu'**il comporte un boîtier qui surmonte le corps chauffant (2) et **en ce que** ledit boîtier intègre un réservoir qui alimente en liquide la chambre de vaporisation (3).

15. Fer à repasser (1) selon l'une quelconque des revendications 1 à 14, **caractérisé en ce que** la grille de filtration (7) présente une surface ondulée.

## Patentansprüche

1. Bügeleisen (1), umfassend einen Heizkörper (2), der eine Verdampfungskammer (3) für die Erzeugung eines Dampfstroms und einen Dampfverteilungskreislauf umfasst, der ermöglicht, den Dampfstrom zu mindestens einem Dampfausgangsloch (10A) zu führen, wobei der Kreislauf einen Hohlraum (51) umfasst, in dem eine Rückhaltevorrichtung (8) angeordnet ist, die ein Filtergitter (7) umfasst, das dazu vorgesehen ist, von dem Dampfstrom transportierte Kesselsteinteilchen zurückzuhalten, wobei der Hohlraum (51) ein offenes Ende (51A) aufweist, durch das der Dampfstrom in den Hohlraum (51) eindringt, **dadurch gekennzeichnet, dass** der Hohlraum (51) eine Sackgasse bildet, aus der der Dampfstrom in Richtung des Dampfausgangslochs (10A) entweicht, indem er erneut am offenen Ende (51A) vorbeiströmt, wobei der in den Hohlraum eindringende Dampfstrom und der aus dem Hohlraum austretende Dampf nebeneinander in einer gleichen Dicke des Heizkörpers (2) angeordnet sind.

2. Bügeleisen nach Anspruch 1, **dadurch gekennzeichnet, dass** das offene Ende (51A) des Hohlraums (51A) auf einer Seite des Hohlraums (51) angeordnet ist und dadurch, dass der Hohlraum an der anderen Seite ein Ende aufweist, das mit einer Öffnung (50) versehen ist, durch die die Rückhaltevorrichtung (8) aus dem Bügeleisen (1) zu ihrer Reinigung entnommen werden kann, wobei die Öffnung (50) durch einen abnehmbaren Verschluss (13), der von der Außenseite der Einrichtung zugänglich ist, verschlossen wird.

3. Bügeleisen nach einem der Ansprüche 1 bis 2, **dadurch gekennzeichnet, dass** der Verteilungskreislauf eine Dampfzufuhrleitung (25) umfasst, die einerseits mit der Verdampfungskammer (3) kommuniziert und die andererseits in das offene Ende (51A) des Hohlraums (51) mündet.

4. Bügeleisen nach Anspruch 3, **dadurch gekennzeichnet, dass** der Heizkörper (2) eine Umfangswand (22) umfasst, die seitlich das offene Ende (51A) des Hohlraums (51) begrenzt, wobei sich die Leitung (25) in das offene Ende (51A) einschiebt, indem mindestens ein Raum zwischen der Leitung (25) und der Umfangswand (22) gelassen wird, der einen Ausgangskanal (26) bildet, durch den der Dampfstrom aus dem Hohlraum (51) entweicht, nachdem er durch das Filtergitter (7) geströmt ist.

5. Bügeleisen nach Anspruch 4, **dadurch gekennzeichnet, dass** der Heizkörper (2) zwei Ausgangskanäle (26) umfasst, die seitlich auf jeder Seite der Leitung (25) angeordnet sind.

6. Bügeleisen nach einem der Ansprüche 4 bis 5, **dadurch gekennzeichnet, dass** die Verdampfungskammer (3) in ihrem oberen Teil durch eine Verschlussplatte (24), die auf der Umfangswand (22) aufliegt, verschlossen wird.

7. Bügeleisen nach einem der Ansprüche 3 bis 6, **dadurch gekennzeichnet, dass** die Dampfzufuhrleitung (25) aus einem Stück hergestellt ist, das an dem Heizkörper (2) angebracht ist und das auf dichte Weise mit einer Öffnung (23A) verbunden ist, die in einer Trennwand (3) eingerichtet ist, die die Verdampfungskammer (3) seitlich begrenzt.

8. Bügeleisen nach Anspruch 7, **dadurch gekennzeichnet, dass** sich die Dampfzufuhrleitung (25) längs des Bügeleisens (1) erstreckt, wobei die Öffnung (23A) an einem hinteren Ende der Verdampfungskammer (3) eingerichtet ist.

9. Bügeleisen nach einem der Ansprüche 3 bis 8, **dadurch gekennzeichnet, dass** die Rückhaltevorrichtung (8) eine Kappe (60) umfasst, die auf dichte und abnehmbare Weise mit der Dampfzufuhrleitung (25) verbunden ist, wobei die Kappe (60) eine axiale Öffnung umfasst, durch die der Dampfstrom in die Rückhaltevorrichtung (8) eingelassen wird.

10. Bügeleisen (1) nach einem der Ansprüche 2 bis 9, **dadurch gekennzeichnet, dass** die Rückhaltevorrichtung (8) einen Behälter (6) zum Auffangen von Kesselstein umfasst, der durch eine Kesselsteinabführungsöffnung (50) in den Hohlraum (51) eingefügt ist, wobei der Behälter (6) in Bezug auf die Abströmungsrichtung des Dampfstroms dem Filtergitter (7) vorgelagert angeordnet ist.

11. Bügeleisen (1) nach einem der Ansprüche 1 bis 10, **dadurch gekennzeichnet, dass** die Vorrichtung (8) ein offenes vorderes Ende und ein geschlossenes rückwärtiges Ende umfasst, wobei die Vorrichtung (8) ein seitliches Fenster (63) umfasst, das das Filtergitter (7) aufnimmt und durch das der Dampfstrom aus der Rückhaltevorrichtung (8) entweicht.

12. Bügeleisen (1) nach Anspruch 11, **dadurch gekennzeichnet, dass** die Rückhaltevorrichtung (8) auf beiden Seiten des Fensters (63) eine Dichtung (61, 62) umfasst.

13. Bügeleisen nach einem der Ansprüche 2 bis 12, **dadurch gekennzeichnet, dass** die Rückhaltevorrichtung (8) fest an dem Verschluss (13) befestigt ist.

14. Bügeleisen (1) nach einem der Ansprüche 1 bis 13, **dadurch gekennzeichnet, dass** es ein Gehäuse umfasst, das den Heizkörper (2) überragt, und dadurch, dass das Gehäuse einen Behälter einschließt, der die Verdampfungskammer (3) mit Flüssigkeit versorgt.

15. Bügeleisen (1) nach einem der Ansprüche 1 bis 14, **dadurch gekennzeichnet, dass** das Filtergitter (7) eine gewellte Oberfläche aufweist.

## Claims

1. Iron (1) comprising a heating body (2) comprising a steam-generating chamber (3) for producing a flow of steam and a steam-distribution circuit for carrying the flow of steam to at least one steam outlet hole (10A), said circuit comprising a recess (51) in which is arranged a retaining device (8) comprising a filtering screen (7) intended for retaining scale particles transported by the flow of steam, said recess (51) having an open end (51A) through which the flow of steam penetrates the recess (51), **characterised in that** the recess (51) forms a dead end from which the flow of steam escapes towards the steam outlet hole (10A) by passing back through said open end (51A), the flow of steam penetrating the recess and the flow of steam leaving the recess being arranged side by side in the same thickness of the heating body (2).

2. Iron according to claim 1, **characterised in that** the open end (51A) of the recess (51) is arranged on one side of the recess (51) and **in that** the recess has on the other side an end provided with a port (50) through which the retaining device (8) can be extracted from the iron (1) in order to be cleaned, said port (50) being closed by a removable plug (13) which is accessible from outside the apparatus.

3. Iron according to any of claims 1 to 2, **characterised in that** the distribution circuit comprises a steam supply duct (25) which connects on the one hand with the steam-generating chamber (3) and opens on the other hand into the open end (51A) of the recess (51).

4. Iron according to claim 3, **characterised in that** the heating body (2) comprises a peripheral wall (22) which laterally delimits the open end (51A) of the recess (51), the duct (25) fitting into the open end (51A), leaving at least a space between the duct (25) and the peripheral wall (22) which forms an outlet channel (26) through which the flow of steam escapes from the recess (51) after passing through the filtering screen (7).

5. Iron according to claim 4, **characterised in that** the heating body (2) comprises two outlet channels (26) arranged laterally on each side of the duct (25).

6. Iron according to any of claims 4 to 5, **characterised in that** the steam-generating chamber (3) is closed in its upper part by a closure plate (24) which rests on the peripheral wall (22).

7. Iron according to any of claims 3 to 6, **characterised in that** the steam supply duct (25) is formed in a component which is inserted into the heating body (2) and which is connected in a sealed manner to an opening (23A) provided in a partition (3) which laterally delimits the steam-generating chamber (3).

8. Iron according to claim 7, **characterised in that** the steam supply duct (25) extends longitudinally relative to the iron (1), said opening (23A) being provided at a rear end of the steam-generating chamber (3).

9. Iron according to any of claims 3 to 8, **characterised in that** the retaining device (8) comprises an end piece (60) which is connected in a sealed and removable manner to the steam supply duct (25), the end piece (60) comprising an axial opening through which the flow of steam is introduced into the retaining device (8).

10. Iron (1) according to any of claims 2 to 9, **characterised in that** the retaining device (8) comprises a scale recovery container (6) which is introduced into the recess (51) through the scale discharge port (50), the container (6) being arranged upstream of the filtering screen (7) with respect to the direction of the flow of steam.

11. Iron (1) according to any of claims 1 to 10, **characterised in that** the device (8) has an open front end and a closed rear end, the device (8) comprising a lateral window (63) which receives the filtering screen (7) and through which the flow of steam escapes from the retaining device (8).

12. Iron (1) according to claim 11, **characterised in that** the retaining device (8) comprises a seal (61, 62) on either side of the window (63).

13. Iron according to any of claims 2 to 12, **characterised in that** the retaining device (8) is rigidly connected to the plug (13).

14. Iron (1) according to any of claims 1 to 13, **characterised in that** it comprises a casing which covers the heating body (2) and **in that** said casing incorporates a tank which supplies the steam-generating chamber (3) with liquid.

15. Iron (1) according to any of claims 1 to 14, **characterised in that** the filtering screen (7) has a corrugated surface.
